# EUROPEAN PATENT APPLICATION

(11) **EP 4 679 804 A1**
(43) Date of publication of application: **14.01.2026**
(21) Application number: 24777876.4
(22) Date of filing: 21.03.2024
(51) Int. Cl.: H04L 67/141, H04W 8/08, H04W 76/10

(54) **COMMUNICATION METHOD AND APPARATUS**

(30) Priority: 31.03.2023 CN 202310366925
(71) Applicant: Huawei Technologies Co., Ltd., Shenzhen, Guangdong 518129 (CN)
(72) Inventor: LI, Hancheng, Shenzhen, Guangdong 518129 (CN); ZHOU, Han, Shenzhen, Guangdong 518129 (CN); WU, Wenfu, Shenzhen, Guangdong 518129 (CN)
(74) Representative: Isarpatent
(86) International application number: PCT/CN2024/083109
(87) International publication number: WO 2024/199087

(57) **Abstract**

This application provides a communication method and apparatus, to reduce a transmission delay and communication costs in a process in which an edge application obtains network data. The method includes: A first user plane network element receives first data, where a source address of the first data is a first address, the first address is an address of a first application, the first application serves a terminal device, and the first application corresponds to a first data network; and the first user plane network element sends the first data to a second user plane network element through a first session, where the first session is a session of the terminal device or a session corresponding to the first application, and the second user plane network element corresponds to a second data network; and/or the first user plane network element receives second data from the second user plane network element through the first session, where a destination address of the second data is an address of the first session or the first address; and the first user plane network element sends the second data to the first application.

## Description

### CROSS-REFERENCE TO RELATED APPLICATIONS

This application claims priority to Chinese Patent Application No. 202310366925.7, filed with the China National Intellectual Property Administration on March 31, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

In current edge computing technologies, applications (also known as edge applications) deployed in an edge data network (edge data network, EDN) may obtain data of a central network or other edge data networks, and send processed application data to user equipment after processing the application data, and the user equipment obtains the application data. For example, in a cloud phone technology, a real phone serves as an input and display device, and a cloud phone application obtains data from a central network or other edge data networks. After performing computational processing on the data from the central network or the other edge data networks, the cloud phone application sends, in a form of video streams to the real phone, content to be displayed on the real phone.

However, currently, the process in which the edge application obtains the data of the central network is generally performed in a non-3rd generation partnership project (3rd generation partnership project, 3GPP) communication manner, and there are problems of a high transmission delay and high communication costs, which requires improvement.

### SUMMARY

This application provides a communication method and apparatus, to reduce a transmission delay and communication costs in a process in which an edge application obtains network data.

According to a first aspect, a communication method is provided. The method may be implemented by a first user plane network element or a component of the first user plane network element. The network element may also be replaced with an apparatus. The component in this application may include, for example, at least one of a chip, a chip system, a processor, a transceiver, a processing unit, or a transceiver unit. For example, an execution body is the first user plane network element. The method may be implemented by using the following steps: The first user plane network element receives first data, where a source address of the first data is a first address, the first address is an address of a first application, the first application serves a terminal device, and the first application corresponds to a first data network; and the first user plane network element sends the first data to a second user plane network element through a first session, where the first session is a session of the terminal device or a session corresponding to the first application, and the second user plane network element corresponds to a second data network; and/or the first user plane network element receives second data from the second user plane network element through the first session, where a destination address of the second data is an address of the first session or the first address; and the first user plane network element sends the second data to the first application.

Based on the first aspect, the data between the first application and the second data network may be transmitted through the first session, so that a transmission delay in a process in which an edge application obtains network data can be reduced. In addition, there is no need to lay a dedicated line between the first application and the second data network to transmit the data, thereby reducing communication costs.

In a possible implementation, the first user plane network element may modify the source address of the first data to the address of the first session; and/or the first user plane network element may modify the destination address of the second data to the first address.

Based on this implementation, the first user plane network element may replace the source address of the first data with an address of the terminal device, or replace the destination address of the second data with the first address, to successfully forward the first data and the second data.

In a possible implementation, the first user plane network element receives first policy information from a session management network element, where the first policy information indicates to send the first data to the second user plane network element through the first session, and/or the first policy information indicates to send the second data to the first application.

In a possible implementation, the first user plane network element receives second policy information from a session management network element, where the second policy information indicates to modify the source address of the first data to the address of the first session, and/or the second policy information indicates to modify the destination address of the second data to the first address.

In a possible implementation, the first session is the session corresponding to the first application, and the first user plane network element may further modify the source address of the first data to a second address, where the second address corresponds to the session corresponding to the first application; and/or the first user plane network element modifies the destination address of the second data to the first address.

Based on this implementation, if a network allocates the second address to the session corresponding to the first application, the first user plane network element may replace the source address of the first data with the second address, to successfully forward the first data and the second data.

In a possible implementation, the first user plane network element may further receive third policy information from a session management network element, where the third policy information indicates to modify the source address of the first data to the second address, and/or the third policy information indicates to modify the destination address of the second data to the first address.

According to a second aspect, a communication method is provided. The method may be implemented by a second user plane network element or a component in the second user plane network element, and the network element may also be referred to as a communication apparatus. The component in this application may include, for example, at least one of a chip, a chip system, a processor, a transceiver, a processing unit, or a transceiver unit. For example, an execution body is the second user plane network element. The method may be implemented by using the following steps: The second user plane network element receives third data from a first user plane network element through a third session, where a source address of the third data is a first address, the first address is an address of a first application, the third session is a session of a terminal device, the first application corresponds to a first data network, and the second user plane network element corresponds to a second data network; and the second user plane network element sends the third data to the second data network; and/or the second user plane network element receives fourth data from the second data network, where a destination address of the fourth data corresponds to the first address; and the second user plane network element sends the fourth data to the first user plane network element through the third session.

Based on the second aspect, the data between the first application and the second data network may be transmitted through the third session, so that a transmission delay in a process in which an edge application obtains network data can be reduced. In addition, there is no need to lay a dedicated line between the first application and the second data network to transmit the data, thereby reducing communication costs.

In a possible implementation, the second user plane network element may further receive fourth policy information from a session management network element, where the fourth policy information indicates to send the third data to the second data network, and/or the fourth policy information indicates to send the fourth data to the first user plane network element through the first session.

According to a third aspect, a communication method is provided. The method may be implemented by a session management network element or a component in the session management network element, and the network element may also be referred to as a communication apparatus. The component in this application may include, for example, at least one of a chip, a chip system, a processor, a transceiver, a processing unit, or a transceiver unit. For example, an execution body is the session management network element. The method may be implemented by using the following steps: The session management network element obtains a first address, where the first address corresponds to a first application, the first application serves a terminal device, and the first application corresponds to a first data network; and the session management network element sends first policy information to a first user plane network element, where the first policy information indicates to send first data to a second user plane network element through a first session, a source address of the first data is the first address, the second user plane network element corresponds to a second data network, and the first session is a session of the terminal device or a session of the first application; and/or the first policy information indicates to send second data to the first application, the second data is received through the first session, the second data is from the second user plane network element, and a destination address of the second data is an address of the first session or the first address.

In a possible implementation, the session management network element may further send second policy information to the first user plane network element, where the second policy information indicates to modify the source address of the first data to the address of the first session, and/or the second policy information indicates to modify the destination address of the second data to the first address.

In a possible implementation, the first session is the session corresponding to the first application, and the session management network element may send third policy information to the first user plane network element, where the third policy information indicates to modify the source address of the first data to a second address, and the second address corresponds to the first session; and/or the third policy information indicates to modify the destination address of the second data to the first address.

In a possible implementation, the session management network element may further create the session corresponding to the first application.

In a possible implementation, the session management network element may create, based on subscription information of the terminal device, the session corresponding to the first application.

Independent of the third aspect or with reference to the third aspect, the session management network element sends fourth policy information to the second user plane network element, where the fourth policy information indicates to send third data received through a third session to the second data network, the third data is from the first user plane network element, a source address of the third data is the first address, and the third session is a session of the terminal device; and/or the fourth policy information indicates to send fourth data to the first user plane network element through the third session, and a destination address of the fourth data is the first address.

According to a fourth aspect, a communication apparatus is provided. The apparatus may implement the method in any possible design of any one of the first aspect to the third aspect. The apparatus has a function of the first user plane network element, the second user plane network element, or the session management network element.

In an optional implementation, the apparatus may include modules that perform and that one-to-one correspond to the methods/operations/steps/actions described in any one of the first aspect to the third aspect. The module may be a hardware circuit, or may be software, or may be implemented by a combination of the hardware circuit and the software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in any one of the first aspect to the third aspect, the apparatus may include the communication unit and the processing unit.

According to a fifth aspect, an embodiment of this application further provides a communication apparatus, including a processor that is configured to execute a computer program (or computer-executable instructions) stored in a memory. When the computer program (or the computer-executable instructions) is executed, the apparatus is enabled to perform the method in any one of the first aspect to the third aspect and any possible implementation of the first aspect to the third aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a sixth aspect, a computer-readable storage medium is provided. The computer-readable storage medium is configured to store a computer program or instructions. When the computer program or the instructions are run, the method in any one of the first aspect to the third aspect and any possible implementation of the first aspect to the third aspect is implemented.

According to a seventh aspect, a computer program product including instructions is provided. When the computer program product runs on a computer, the method in any one of the first aspect to the third aspect and any possible implementation of the first aspect to the third aspect is implemented.

According to an eighth aspect, an embodiment of this application further provides a communication apparatus, configured to perform the method in any one of the first aspect to the third aspect and any possible implementation of the first aspect to the third aspect.

According to a ninth aspect, a chip system is provided. The chip system includes a logic circuit (which may alternatively be understood as that the chip system includes a processor, and the processor may include a logic circuit, and the like), and may further include an input/output interface. The input/output interface may be configured to input a message, or may be configured to output a message. The input/output interface may be a same interface. In other words, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending function and the receiving function in the method in any one of the first aspect to the third aspect and any possible implementation of the first aspect to the third aspect. The logic circuit may be further configured to transmit a message to the input/output interface, or receive, from the input/output interface, a message from another communication apparatus. The chip system may be configured to implement the method in any one of the first aspect to the third aspect and any possible implementation of the first aspect to the third aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a tenth aspect, a communication system is provided. The communication system may include a first user plane network element and a second user plane network element. The first user plane network element may be configured to implement the first aspect and any possible implementation of the first aspect; or the second user plane network element is configured to implement the second aspect and any possible implementation of the second aspect. Optionally, the communication system may further include a session management network element, configured to implement the third aspect and any possible implementation of the third aspect.

For technical effect brought by the second aspect to the tenth aspect, refer to the descriptions of the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a diagram of an architecture of another wireless communication system according to an embodiment of this application;
FIG. 4 is a schematic flowchart of a communication method according to an embodiment of this application;
FIG. 5 is a diagram of a communication scenario of a first session according to an embodiment of this application;
FIG. 6 is a diagram of a communication scenario of another first session according to an embodiment of this application;
FIG. 7A and FIG. 7B are a schematic flowchart of another communication method according to an embodiment of this application;
FIG. 8A and FIG. 8B are a schematic flowchart of another communication method according to an embodiment of this application;
FIG. 9 is a schematic flowchart of another communication method according to an embodiment of this application;
FIG. 10 is a diagram of a communication scenario of a third session according to an embodiment of this application;
FIG. 11A and FIG. 11B are a schematic flowchart of another communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of another communication apparatus according to an embodiment of this application.

### DESCRIPTION OF EMBODIMENTS

Embodiments of this application provide a communication method and apparatus. The method and the apparatus are based on a same inventive concept. Because the method and the apparatus have a similar problem-resolving principle, for implementations of the apparatus and the method, refer to each other, and no repeated description is provided.

In the description of this application, words such as "first" and "second" are merely used for distinguishing between descriptions, and cannot be understood as an indication or implication of relative importance, or cannot be understood as an indication of implication of an order. It should be noted that a sequence of "first", "second", and the like is not limited in this application. For example, "second" may appear first, and then "first" appears. This is not limited in this application.

In the description of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

The method provided in embodiments of this application may be applied to a 4th generation (4th generation, 4G) communication system, for example, a long term evolution (long term evolution, LTE) communication system; or may be applied to a 5th generation (5th generation, 5G) communication system, for example, a 5G new radio (new radio, NR) communication system; or may be applied to various future communication systems, for example, a 6th generation (6th generation, 6G) communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system. It may be understood that a buffer status report determining method provided in embodiments of this application may be applied to another communication system.

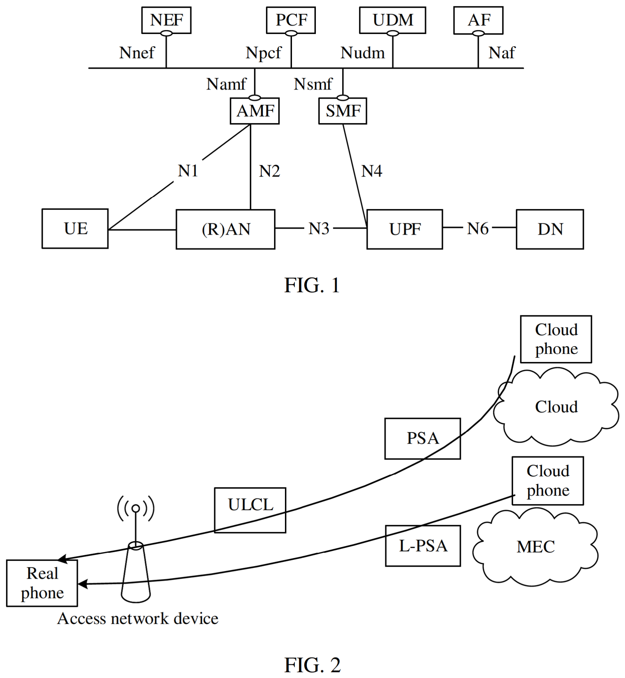

FIG. 1 shows a possible example of an architecture of a 5th generation mobile communication system (the 5th generation system, 5GS). The architecture of the communication system may include a terminal device, a (radio) access network ((radio) access network, (R)AN), and a core network (core network). For example, in the architecture of the communication system, the radio access network may include an access network device. The core network may include a network exposure function (network exposure function, NEF) network element, a policy control function (policy control function, PCF) network element, a unified data management (unified data management, UDM) function network element, an application function (application function, AF) network element, an access and mobility management function (access and mobility management function, AMF) network element, a session management function (session management function, SMF) network element, and a user plane function (user plane function, UPF) network element. The AMF network element may be connected to the access network device through an N2 interface, the access network device may be connected to the UPF through an N3 interface, the SMF may be connected to the UPF through an N4 interface, the AMF network element may be connected to UE through an N1 interface, and the UPF may be connected to the DN through an N6 interface. An interface name is merely an example for description. This is not specifically limited in embodiments of this application. It should be understood that embodiments of this application are not limited to the communication system shown in FIG. 1. Names of the network elements shown in FIG. 1 are merely used as examples for description herein, and are not intended to limit the network elements included in the architecture of the communication system to which the method in this application is applicable. Functions of the network elements or devices in the communication system are described in detail below.

A terminal device may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), an in-vehicle device (for example, a car, a bicycle, an electric vehicle, an airplane, a ship, a train, or a high-speed train), a virtual reality (virtual reality, VR) device, an augmented reality (augmented reality, AR) device, a smart point of sale (point of sale, POS) machine, a customer premises equipment (customer premises equipment, CPE), a wireless terminal in industrial control, a smart home device (for example, a refrigerator, a television, an air conditioner, or an electric meter), a smart robot, a robot arm, a workshop device, a wireless terminal in unmanned driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal function in D2D communication. In this application, a terminal device having a wireless transceiver function and a chip that can be disposed in the terminal device are collectively referred to as the terminal device. A device form of the terminal is not limited in embodiments of this application.

An (R)AN device is a device that provides access for a terminal device, and includes a radio access network (radio access network, AN) device and an access network (access network, AN) device. The RAN device is mainly a wireless network device in a 3GPP network, and the AN device may be an access network device defined in non-3GPP. An RAN device is mainly responsible for functions such as radio resource management, quality of service (quality of service, QoS) management, and data compression and encryption on an air interface side. In systems using different radio access technologies, names of devices having a base station function may be different. For example, in a 5G system, the device is referred to as a RAN device or a gNB (5G NodeB) device.

In a possible scenario, the (R)AN device may be a base station (base station), an evolved NodeB (evolved NodeB, eNodeB) in 4G, an access point (access point, AP), a transmission reception point (transmission reception point, TRP), a next generation NodeB (next generation NodeB, gNB) in 5G, a base station in a 6th generation (6th generation, 6G) mobile communication system, a base station in a future mobile communication system, a satellite, an access node in the Wi-Fi system, or the like. The network device may be a macro base station (for example, 110a in FIG. 1), a micro base station or an indoor base station (for example, 110b in FIG. 1), a relay node or a donor node, or a radio controller in a CRAN scenario. Alternatively, the (R)AN device may be a device that functions as a base station in device to device (device to device, D2D) communication, internet of vehicles communication, or machine communication. Optionally, the (R)AN device may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of (R)AN devices collaborate to assist the terminal in implementing radio access, and different (R)AN devices separately implement some functions of the base station. For example, the (R)AN device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the (R)AN device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for descriptions in this application. Any one of the CU (or the CU-CP or the CU-UP), the DU, and the RU in this application may be implemented by using a software module, a hardware module, or a combination of a software module and a hardware module.

The access and mobility management function network element may be configured for access control and mobility management of a terminal device. In actual application, the access and mobility management function network element includes a mobility management function of a mobility management entity (mobility management entity, MME) in a long term evolution (long term evolution, LTE) network architecture, and includes an access management function. The access and mobility management function network element may be specifically responsible for registration of the terminal device, mobility management, a tracking area update procedure, reachability detection, selection of a session management function network element, mobility state transition management, and the like. For example, in 5G, the access and mobility management function network element may be an AMF network element, for example, as shown in FIG. 1. In future communication, for example, in 6G, the access and mobility management function network element may still be the AMF network element or have another name. This is not limited in this application. When the access and mobility management function network element is the AMF network element, the AMF may provide a Namf service.

The session management function network element may be configured to be responsible for session management (including session creation, modification, and release) of the terminal device, selection and reselection of a user plane function network element, internet protocol (internet protocol, IP) address allocation of the terminal device, quality of service (quality of service, QoS) control, and the like. For example, in 5G, the session management function network element may be an SMF network element, for example, as shown in FIG. 1. In future communication, for example, in 6G, the session management function network element may still be the SMF network element or have another name. This is not limited in this application. When the session management function network element is the SMF network element, the SMF may provide a Nsmf service.

The user plane function network element is responsible for user data forwarding and receiving in the terminal device. The user plane function network element may receive user data from a data network, and transmit the user data to the terminal device via an access network device. The UPF network element may further receive the user data from the terminal device via the access network device, and forward the user data to the data network. Transmission resources and scheduling functions that are used by the UPF network element to provide services for the terminal device are managed and controlled by the SMF network element. For example, in 5G, the user plane function network element may be the UPF network element, for example, as shown in FIG. 1. In future communication, for example, in 6G, the user plane function network element may still be the UPF network element or have another name. This is not limited in this application.

In addition, in the architecture shown in FIG. 1, if there is another UPF, namely, an intermediate UPF (Intermediate-UPF, I-UPF), between the (R)AN device and the UPF, an interface between the RAN and the I-UPF is referred to as an N3 interface, and an interface between the I-UPF and the UPF is referred to as an N9 interface. Both N3 and N9 are interfaces at a user session granularity, and are used to transmit a user packet by using a general packet radio service (general packet radio service, GPRS) tunneling protocol for the user plane (GPRS tunneling protocol for the user plane, GTP-U) protocol.

In the following, to distinguish different functions of the UPF, descriptions are separately provided by using an uplink classifier (uplink classifier, ULCL), a protocol data unit (protocol data unit, PDU) session anchor (PDU session anchor, PSA), and a local-PSA (local-PSA, L-PSA). The ULCL is configured to provide an offloading function, the PSA is used as an anchor UPF of a user session, and the L-PSA is configured to access a local network. A plurality of the ULCL, the PSA, and the L-PSA may be co-located.

The policy control function network element mainly supports a unified policy framework to control network behavior and provides policy rules for a control plane network function, and is responsible for obtaining user subscription information related to policy decisions. For example, in 5G, the policy control function network element may be a PCF network element, for example, as shown in FIG. 1. In future communication, for example, in 6G, the policy control function network element may still be the PCF network element or have another name. This is not limited in this application. When the policy control function network element is the PCF network element, the PCF network element may provide an Npcf service.

The network exposure function network element mainly supports secure interaction between the 3GPP network and a third-party application. For example, in 5G, the network exposure function network element may be an NEF network element, for example, as shown in FIG. 1. In future communication, for example, in 6G, the network exposure function network element may still be the NEF network element or have another name. This is not limited in this application. When the network exposure function network element is the NEF, the NEF may provide an Nnef service for another network function network element.

The application function network element mainly supports interacting with a 3GPP core network to provide services, for example, affecting a data routing decision and a policy control function, or providing some third-party services for a network side. For example, in 5G, the application function network element may be an AF network element, for example, as shown in FIG. 1. In future communication, for example, in 6G, the application function network element may still be the AF network element or have another name. This is not limited in this application. When the application function network element is the AF network element, the AF network element may provide a Naf service.

The unified data management function network element is configured for generation of authentication credentials, user identification handling (for example, storage and management of permanent user identifiers), access authorization control, subscription data management, and the like. For example, in 5G, the unified data management function network element may be a UDM network element, for example, as shown in FIG. 1. In future communication, for example, in 6G, the unified data management function network element may still be the UDM network element or have another name. This is not limited in this application. When the unified data management function network element is the UDM network element, the UDM network element may provide a Nudm service.

A data network (data network, DN) is a service network that provides a data transmission service for a user, for example, an IP multi-media service (IP multi-media service, IMS) or an internet (Internet).

The UE accesses the DN by using a PDU session created between the UE and the DN.

Each network element in the core network may also be referred to as a functional entity or device, and may be a network element implemented on dedicated hardware, a software instance running on dedicated hardware, or an instance of a virtualized function on an appropriate platform. For example, a virtualization platform may be a cloud platform.

It should be noted that the architecture of the communication system shown in FIG. 1 is not limited to including only the network elements shown in the figure, and may further include another device not shown in the figure. Examples are not listed herein in this application one by one.

It should be noted that a distribution form of the network elements is not limited in embodiments of this application. The distribution form shown in FIG. 1 is merely an example, and is not limited in this application.

For ease of description, in this application, the network elements shown in FIG. 1 are used as examples for description below, and an XX network element is directly referred to as XX for short. For example, the SMF network element is referred to as an SMF for short. It should be understood that names of all network elements in this application are merely examples, and may also be referred to as other names in future communication, or the network element in this application may be replaced by another entity or device that has a same function in future communication. This is not limited in this application. Unified descriptions are provided herein, and details are not described below again.

It should be noted that the communication system shown in FIG. 1 does not constitute any limitation on a communication system to which embodiments of this application are applicable. The architecture of the communication system shown in FIG. 1 is a 5G system architecture. Optionally, the method in embodiments of this application is further applicable to various future communication systems, for example, a 6G or another communication network.

In a cloud phone technology, a real phone is used as an input and display device. In addition, a cloud phone application (or referred to as a cloud phone) obtains network data, performs calculation processing on the data, and sends, in a form of a video stream, content that needs to be displayed on a real phone to the real phone.

As shown in FIG. 2, currently, a cloud phone service mainly has two deployment manners. When a cloud phone is deployed on a cloud (for example, a server of a central network), a delay from a real phone to the cloud phone is high, and bandwidth is unstable, which may cause poor experience. Deploying the cloud phone on an edge computing resource (for example, multi-access edge computing (multi-access edge computing, MEC)) that is close to a user can reduce a delay and provide stable transmission bandwidth, improving user experience.

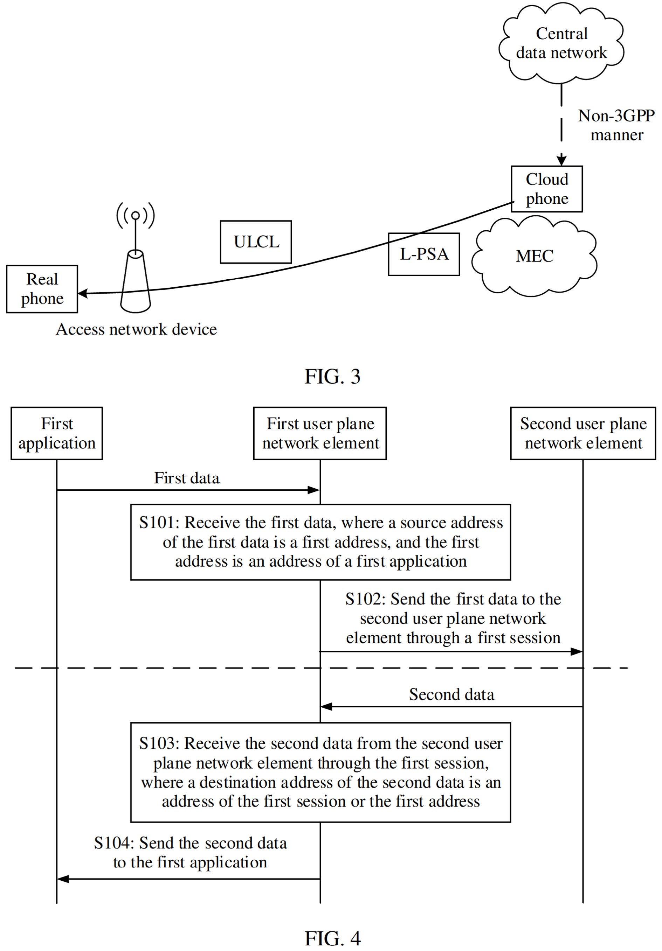

As shown in FIG. 3, when a cloud phone application is deployed in MEC, a process in which the cloud phone application obtains data of a central network is generally performed over a wide area network, or is performed over a dedicated line network between a server and a data source. However, these parameter manners cannot effectively provide data transmission assurance that meets a service QoS requirement, and there are problems of a high transmission delay and high communication costs. As a result, user experience is reduced, and needs to be improved. In addition, application patterns deployed in the MEC, such as cloud gaming and cloud photographing, have similar problems.

This application provides a communication method, to improve a transmission delay and communication costs in a process in which an edge application obtains network data, and improve user experience. The following describes the method with reference to FIG. 4. In FIG. 4, an example in which execution bodies are a first application (or a first application server, for example, an edge application server (edge application server, EAS)), a first user plane network element, and a second user plane network element is used for description. The first user plane network element may be an L-PSA of a local data network (namely, a first data network) in which the first application is located, or when a ULCL and the L-PSA are co-located, the first user plane network element may be a co-located network element (for example, referred to as a ULCL).

It may be understood that, in embodiments of this application, the first application serves a terminal device, and the first application corresponds to the first data network. The first application may be an application deployed in an edge data network (referred to as the local data network). Correspondingly, the first data may be, for example, data sent by the first application to a central data network or a second data network. For example, the first application may be a cloud phone application.

As shown in FIG. 4, the communication method provided in this embodiment of this application may include steps shown in S101 and S102 and/or S103 and S104.

S101: A first user plane network element receives first data, where a source address of the first data is a first address, and the first address is an address of a first application.

The first data may be data sent by the first application to a second data network. Because the first user plane network element is used as an L-PSA of the first application, the data that is sent by the first application and whose destination is the second data network may be sent from a first data network via the first user plane network element. Therefore, in S101, the first user plane network element may receive the first data.

Optionally, in S101, the first user plane network element may identify, according to a first data detection rule, the first data in data from the first application. For example, according to the first data detection rule, when identifying that the data from the first application meets a condition of the first data, that is, a source address of the data is the first address, the first user plane network element determines that the data is the first data. For example, the first data detection rule is, for example, a packet detection rule (packet detection rule, PDR), where the first data detection rule may carry the condition of the first data, that is, the first data is from the first application, and the source address is the first address.

Further, optionally, the first data detection rule may be sent by an SMF to the first user plane network element. For example, the SMF may generate the first data detection rule based on the address (namely, the first address) of the first application, and configure the first data detection rule for the first user plane network element through a session creation or modification message.

The SMF may obtain the first address of the first application. Optionally, the first address may be an IP address of the first application in the first data network, or may be an IP address obtained through translation. For example, the address of the first application in the first data network is an IP 2, and a gateway device of the first data network may perform address translation on the IP address of the first application, that is, translate the IP 2 into an IP 3. When the first application sends the data, a source address of the data is the IP 2. When the data passes through the gateway device, the gateway device replaces the source address of the data with the IP 3, and stores a correspondence between the IP 2 and the IP 3. Then, the gateway device sends the data to the first user plane network element. Therefore, in this example, the IP3 may be used as the first address. In addition, if address translation is not performed, an address of the data received by the first user plane network element is an address IP 2 of the first application. In this case, the IP 2 may be used as the first address.

Optionally, in this application, the SMF may obtain the first address from a PCF, or may obtain the first address from another core network element, for example, a UDM. For example, the address of the first application is known to an AF. For example, when the first application is created or deployed, the address of the first application needs to be registered with the AF. Therefore, the AF may send the first address to the PCF or the another core network element, or the AF sends the first address to the PCF or the another core network element via an NEF. Correspondingly, the PCF or the another core network element may send the first address to the SMF. For another example, the AF may also be the first application.

In an example, when the first address is sent to the SMF via the PCF, the PCF may include the first address in a user session policy indication. In addition, in another example, the SMF may query a domain name server (domain name server, DNS) or an edge application discovery function (edge application server discovery function, EASDF) for the address of the first application. For example, a terminal device may obtain an identifier of the first application from subscription information of the terminal device, and report the identifier to the SMF, so that the SMF can query the address of the first application based on the identifier of the first application.

S102: The first user plane network element sends the first data to a second user plane network element through a first session, where the first session is a session of the terminal device or a session corresponding to the first application, and the second user plane network element corresponds to the second data network.

Optionally, in S102, the first user plane network element may forward the first data to the second user plane network element according to a first data processing rule. For example, the first data processing rule indicates to forward, through the first session, the first data whose source address is the first address, or indicates to send the first data to the second user plane network element through the first session. The first data processing rule corresponds to the first data detection rule, that is, the first user plane network element processes, according to the first data processing rule, the data identified according to the first data detection rule. The first data processing rule is, for example, a forwarding action rule (forwarding action rule, FAR).

Further, optionally, the first data processing rule may be sent by the SMF to the first user plane network element. For example, the SMF may generate the first data processing rule based on the address (namely, the first address) of the first application, and configure the first data processing rule for the first user plane network element through a session creation or modification message. For a process in which the SMF obtains the first address, refer to the description in S101. Details are not described herein again. Optionally, the SMF may configure the first data detection rule and the first data processing rule for the first user plane network element through a same creation or modification message.

It may be understood that the second data network in S102 may be a central data network, or an edge data network or a data network other than the first data network. It may be understood that the second data network may also be a same data network as the first data network, that is, the first data may be sent by the first application to another application in the first data network. The second user plane network element may be an L-PSA of the second data network.

Optionally, a destination address of the first data belongs to the second data network. For example, the destination address of the first data may be an address of an application server in the second data network.

In embodiments of this application, the first session may meet a condition 1 or a condition 2.

The following separately describes the foregoing two conditions that the first session meets.

Condition 1: The first session is a session of a first device.

In the condition 1, the first session may be a session created by a network for the terminal device, and the session may be used to transmit the data of the first application. In an example in which the first application is a cloud phone application, a 5G core network (5G core network, 5GC) may create a first session for the terminal device, and a session type of the first session is a cloud phone service type (the cloud phone service type is used as an example in this example, and a specific session type is not limited in the present invention). For example, the SMF creates the first session.

A user plane tunnel of the first session includes a user plane tunnel between an access network device of user equipment and a ULCL and a user plane tunnel between the ULCL and the second user plane network element. Optionally, when the ULCL and the first user plane network element are not co-located, the first session may further include a user plane tunnel between the ULCL and the first user plane network element.

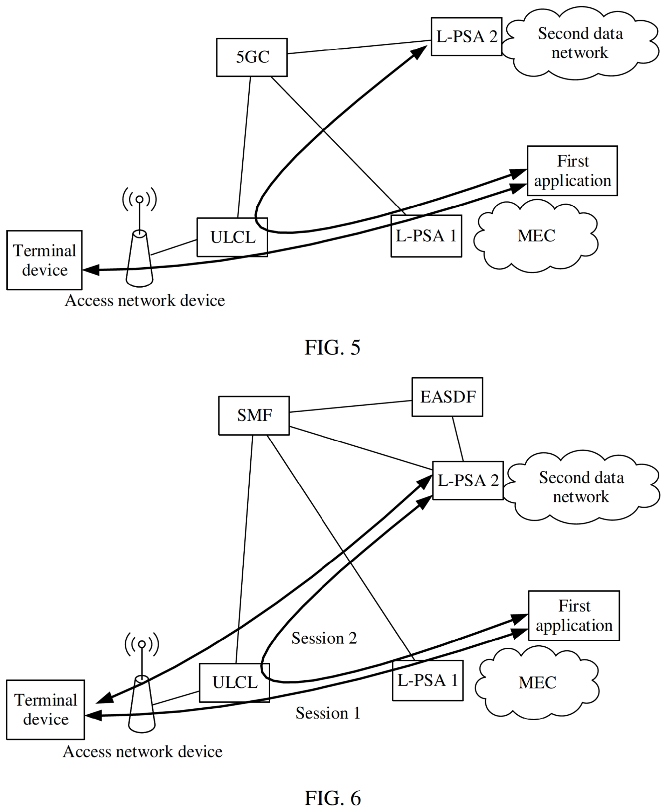

For example, as shown in FIG. 5, when the ULCL and an L-PSA 1 of the first data network are not co-located, the user plane tunnel of the first session may include a GTP-U tunnel (an N3 interface) between the access network device and the ULCL, a tunnel (an N9 interface) between the ULCL and the L-PSA 1, and a tunnel (an N9 interface) between the ULCL and an L-PSA 2. In this case, the first user plane network element is the L-PSA 1. The second user plane network element is the L-PSA 2. Therefore, in S102, when the L-PSA 1 shown in FIG. 5 sends the first data through the first session, the L-PSA 1 may send the first data to the L-PSA 2 via the ULCL through the first session, and subsequently the L-PSA 2A may forward the first data based on the destination address of the first data.

It may be understood that, in the communication scenario shown in FIG. 5, the data between the first application and the second data network may be transmitted through the tunnel between the L-PSA 1 of the first session and the ULCL and the tunnel between the ULCL and the L-PSA 2. The session between the first application and the terminal device may be transmitted through the tunnel between the access network device and the ULCL and the tunnel between the ULCL and the L-PSA 1, and the two tunnels belong to a session between the access network device and the L-PSA 1. In the scenario shown in FIG. 5, it may be considered by default that the terminal device does not need to transmit data to the second data network, and all data of the terminal device is sent to or from the first application.

In addition, it may be understood that in this embodiment of this application, the L-PSA 2 is used as an anchor UPF of the second data network. When the second data network is a central data network, the anchor UPF of the second data network may be referred to as a PSA.

For another example, when the ULCL and an L-PSA of the first data network are co-located, the ULCL is used as the L-PSA of the first data network, and the user plane tunnel of the first session may include a GTP-U tunnel (an N3 interface) between the access network device and the ULCL and a tunnel (an N9 interface) between the ULCL and the L-PSA of the second data network. In this case, the first user plane network element is the ULCL, and the second user plane network element is the L-PSA of the second data network. Therefore, in S102, when sending the first data through the first session, the ULCL may send the identified first data to the L-PSA of the second data network through the first session, and subsequently the L-PSA of the second data network may forward the first data based on the destination address of the first data.

Optionally, in the condition 1, before sending the first data to the second user plane network element, the first user plane network element may further replace (or modify or update) the source address of the first data with an address of the first session. The address of the first session may be an address allocated by a 5GS (for example, the SMF), or may be an address of the terminal device. Therefore, for the second user plane network element, a source of the first data is the first session. An operation of replacing the source address of the first data may be performed by the first user plane network element according to the first data processing rule. Optionally, the first data processing rule may further indicate to modify the source address of the first data to the address of the first session.

Condition 2: The first session is the session corresponding to the first application.

In the condition 2, the session corresponding to the first application (which may be referred to as a second session) may be a session created by a network based on the first address. For example, the SMF may create the second session based on the first address. For a manner in which the SMF obtains the first address, refer to the description in S101.

Optionally, in the condition 2, the second session may be used to transmit the data of the first application. A user plane tunnel of the second session includes a user plane tunnel between an access network device of user equipment and a ULCL and a user plane tunnel between the ULCL and the second user plane network element. Optionally, when the ULCL and the first user plane network element are not co-located, the second session may further include a user plane tunnel between the ULCL and the first user plane network element.

For example, as shown in FIG. 6, when the ULCL and an L-PSA 1 of the first data network are not co-located, the user plane tunnel of the second session (represented as a session 2 in FIG. 6) may include a GTP-U tunnel (an N3 interface) between the access network device and the ULCL, a tunnel (an N9 interface) between the ULCL and the L-PSA 1, and a tunnel (an N9 interface) between the ULCL and an L-PSA 2. In this case, the first user plane network element is the L-PSA 1. The second user plane network element is the L-PSA 2. Therefore, in S102, when the L-PSA 1 shown in FIG. 6 sends the first data through the second session, the L-PSA 1 may send the first data to the L-PSA 2 via the ULCL through the second session, and subsequently the L-PSA 2A may forward the first data based on the destination address of the first data. It may be understood that, in FIG. 6, an example in which the SMF obtains the address of the first application by using the EASDF is used. As described above, in actual application, the SMF may also obtain the address of the first application via the PCF or the another network element. Therefore, the EASDF does not need to participate.

It may be understood that, in the communication scenario shown in FIG. 6, the data between the first application and the second data network may be transmitted through the tunnel between the L-PSA 1 of the session 2 and the ULCL and the tunnel between the ULCL and the L-PSA 2. The session between the first application and the terminal device may be transmitted through the tunnel between the access network device and the ULCL and the tunnel between the ULCL and the L-PSA 1, and the two tunnels belong to a session 1 between the access network device and the L-PSA 1. Optionally, the data between the terminal device and the second data network may be transmitted through the tunnel between the access network device and the ULCL and the tunnel between the ULCL and the L-PSA 2, and the two tunnels may belong to a session other than the session 1 and the session 2.

For another example, when the ULCL and an L-PSA of the first data network are co-located, the ULCL is used as the L-PSA of the first data network, and the user plane tunnel of the second session may include a GTP-U tunnel (an N3 interface) between the access network device and the ULCL and a tunnel (an N9 interface) between the ULCL and the L-PSA of the second data network. In this case, the first user plane network element is the ULCL, and the second user plane network element is the L-PSA of the second data network. Therefore, in S102, when sending the first data through the second session, the ULCL may send the identified first data to the L-PSA of the second data network through the second session, and subsequently the L-PSA of the second data network may forward the first data based on the destination address of the first data.

Optionally, in the condition 2, before sending the first data, the first user plane network element may replace the source address of the first data with a second address. The second address corresponds to the second session. For example, the second address may be an address allocated by the SMF to the second session. For example, the second address may be the same as the first address, or may be an address obtained by performing address translation on the first address. An operation of replacing the source address of the first data may be performed by the first user plane network element according to the first data processing rule. Optionally, the first data processing rule may further indicate to modify the source address of the first data to the second address.

Optionally, in the condition 2, if the SMF does not allocate the address (that is, the second address) to the second session, before sending the first data to the second user plane network element, the first user plane network element may further replace the source address of the first data with the address of the first session. Optionally, the first data processing rule may further indicate to modify the source address of the first data to the address of the first session.

Optionally, in embodiments of this application, the 5GS may configure a user plane network element related to the second session based on policy information corresponding to the second session. The user plane network element related to the second session includes but is not limited to the ULCL, the L-PSA 1, and the L-PSA 2. For example, the policy information corresponding to the second session may include a forwarding policy, a QoS policy, a charging policy, or the like.

The policy information corresponding to the second session is determined based on policy information corresponding to the session of the terminal device and/or the subscription information of the terminal device. The session of the terminal device may be a session created by a network for the terminal device. FIG. 6 is used as an example. The session may be the session 1 between the access network device and the L-PSA 1 in FIG. 6, and the session may be associated with the first application. For example, the session 1 is a tunnel between the access network device of the terminal device (real UE) and the L-PSA of the first data network, and the session may be used to transmit data between the terminal device and the first application. The policy information corresponding to the session of the terminal device may be policy information that has been used by the session of the terminal device, and the policy information may be determined based on the subscription information of the terminal device.

For example, the first application is a cloud phone, and the policy information corresponding to the second session may be determined based on one or more of the following manners 1 to 3.

Manner 1: Subscription information of the second session may be subscription information of the real UE, or may be policy information corresponding to the session of the terminal device. In other words, the second session of the cloud phone and the session of the terminal device (namely, the real UE) may have a same application access policy. The session of the terminal device herein is, for example, a session between the access network device of the terminal device and the L-PSA corresponding to the first application, for example, the session 1 between the access network device and the L-PSA 1 shown in FIG. 6.

Manner 2: The subscription information of the terminal device (namely, the real UE) includes or indicates an application access policy and/or subscription information of the cloud phone. When the second session is created, the SMF may obtain the application access policy or the subscription information of the cloud phone from the subscription information of the terminal device, to determine subscription information of the second session.

Manner 3: The subscription information of the terminal device (namely, the real UE) includes an identifier of the first application, and the SMF may query, based on the identifier of the first application, policy information corresponding to the first application, and determine the policy information of the second session based on policy information of the session corresponding to the first application.

In the foregoing manner 2 and manner 3, the second session of the cloud phone and the session of the terminal device (namely, the real UE) may have a same or different application access policies. This is not specifically limited in this application.

S103: The first user plane network element receives second data from the second user plane network element through the first session, where a destination address of the second data is the address of the first session or the first address.

The second data may be data sent by the second data network to the first application via the second user plane network element. Because the first user plane network element is used as the L-PSA of the first data network in which the first application is located, data sent from another data network to the first data network may be sent to the first data network via the first user plane network element. Therefore, in S103, the first user plane network element may receive the second data.

Optionally, in S103, the first user plane network element may identify the second data from the second user plane network element according to a second data detection rule. For example, according to the second data detection rule, when identifying that data received from the second user plane network element through the first session meets a condition of the second data, that is, a destination address of the data is the address of the first session or the first address, the first user plane network element determines that the data is the second data. For example, the second data detection rule is, for example, a packet detection rule, and may indicate that the second data is the data received from the second user plane network element through the first session, and the destination address of the data is the address of the first session or the first address.

If the first session is the session of the terminal device, the second data is the data received from the second user plane network element through the first session, and the destination address of the second data is the address of the first session. If the first session is the session corresponding to the first application, and the SMF allocates a session address (for example, the second address) to the session, the second data is the data received from the second user plane network element through the first session, and the destination address of the second data is the address of the first session. If the SMF does not allocate the address of the session, the destination address of the second data may be the first address.

Further, optionally, the second data detection rule may be sent by the SMF to the first user plane network element. For example, the SMF may generate the second data detection rule based on the address (namely, the first address) of the first application, and configure the second data detection rule for the first user plane network element through a session creation or modification message. For a manner in which the SMF obtains the first address, refer to the description in S 101.

S104: The first user plane network element sends the second data to the first application.

Optionally, in S104, the first user plane network element may forward the second data to the first application according to a second data processing rule. For example, the second data processing rule indicates that the second data is to be sent to the first application. The second data processing rule corresponds to the second data detection rule, that is, the first user plane network element processes, according to the second data processing rule, the data identified according to the second data detection rule. The second data processing rule is, for example, a forwarding action rule.

Further, optionally, the second data processing rule may be sent by the SMF to the first user plane network element. For example, the SMF may generate the second data processing rule based on the address (namely, the first address) of the first application, and configure the second data processing rule for the first user plane network element through a session creation or modification message. For a process in which the SMF obtains the first address, refer to the description in S101. Details are not described herein again.

Optionally, the SMF may configure the second data detection rule and the second data processing rule for the first user plane network element through a same creation or modification message.

In addition, optionally, the SMF may configure at least two of the first data detection rule, the first data processing rule, the second data detection rule, and the second data processing rule for the first user plane network element through a same creation or modification message.

Similar to the description in S102, the first session in S103 and S104 may meet the condition 1 or the condition 2.

For example, the scenario shown in FIG. 5 is still used as an example. When the condition 1 is met, after receiving the second data through the first session, the L-PSA 1 may send the second data to the first application based on the first address. The second data may be sent by the L-PSA 2 to the L-PSA 1 via the ULCL through the first session. In this example, the L-PSA 1 is the first user plane network element, and the L-PSA 2 is the second user plane network element.

For another example, when the condition 1 is met, after receiving the second data through the first session, the ULCL may send the second data to the first application based on the first address. The second data may be sent by the L-PSA 2 to the ULCL through the first session. In this example, the ULCL is the first user plane network element, and the L-PSA 2 is the second user plane network element.

Optionally, in the condition 1, before sending the second data to the first application, the first user plane network element may further replace the destination address of the second data with the first address from the address of the first session. An operation of replacing the destination address of the second data may be performed by the first user plane network element according to the second data processing rule. Optionally, the second data processing rule may further indicate to modify the destination address of the second data to the first address.

For another example, in the scenario shown in FIG. 6, when the condition 2 is met, for a process for forwarding the second data, refer to the transmission process of the second data in the scenario in FIG. 5. Details are not described again.

Optionally, in the condition 2, if the SMF allocates an address to the session corresponding to the first application, before sending the second data, the first user plane network element may replace the destination address of the second data with the first address from the address of the first session. An operation of replacing the destination address of the second data may be performed by the first user plane network element according to the second data processing rule. Optionally, the second data processing rule may further indicate to modify the destination address of the second data to the first address.

It may be understood that when S201 and S202, and S203 and S204 are all performed, an execution time sequence of S201 and S202, and S203 and S204 is not limited in this application. For example, S201 and S202 may be performed before S203 and S204, or S203 and S204 may be performed before S201 and S202. For another example, S201 and S202, and S203 and S204 may also be performed at the same time without affecting each other. In addition, in the procedure shown in FIG. 2, S201 and S202 may be performed but S203 and S204 are not performed, or S203 and S204 may be performed but S201 and S202 are not performed.

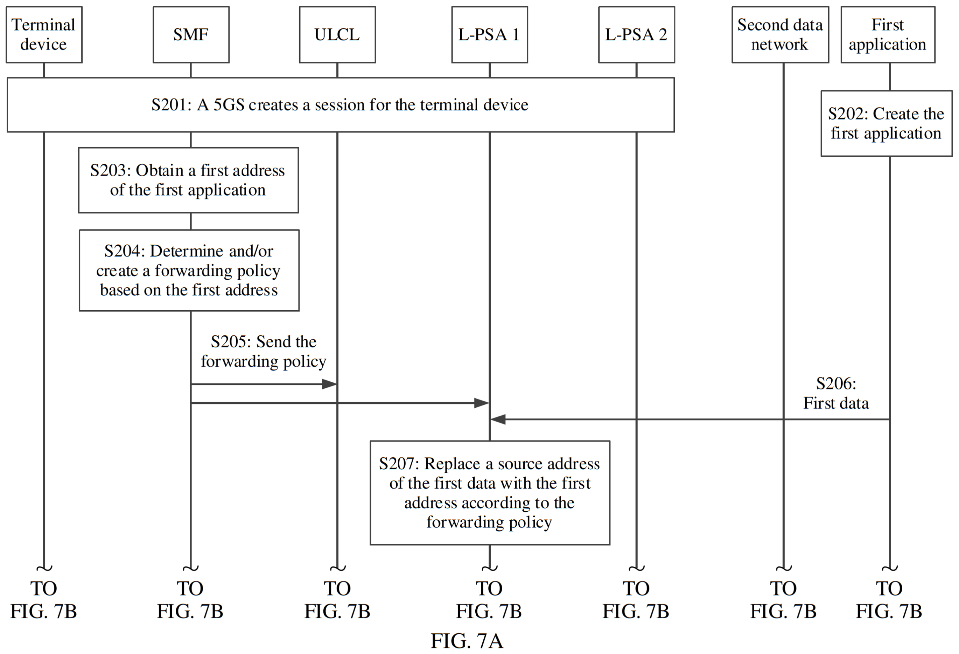

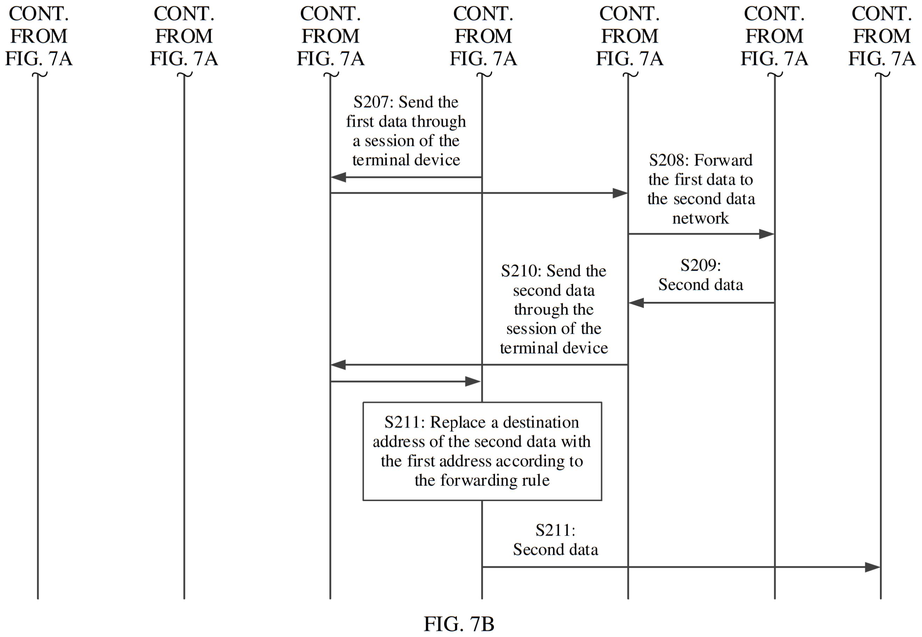

With reference to an example in FIG. 7A and FIG. 7B, the following describes a procedure of the communication method shown in FIG. 4 in the condition 1 by using an example in which the first application is a cloud phone.

S201: Optionally, a 5GS creates a session for a terminal device.

In the condition 1, the session is a session of the terminal device.

For example, a session type of the session may be a cloud phone service type.

In S201, the 5GS may further insert a ULCL into the session, and the ULCL is used to forward a packet of the terminal device to an L-PSA 1. The L-PSA 1 is an L-PSA of a first data network in which the first application is located.

FIG. 5 is used as an example. A user plane tunnel of the session may include a tunnel between an access network device of the terminal device and the ULCL, a tunnel between the ULCL and the L-PSA 1, and a tunnel between the ULCL and an L-PSA 2. The L-PSA 2 is an L-PSA of a second data network.

S202: Create the first application.

In S202, the terminal device may send a creation request or information to a computing platform in which the cloud phone is located, and the computing platform creates the first application based on the creation request or information. The computing platform is, for example, an MEC platform to which the first application belongs.

S203: The 5GS obtains a first address of the first application.

The first address may be an address (for example, the foregoing IP 2) of the first application, or may be an address (for example, the foregoing IP 3) obtained by performing address translation on the address of the first application.

Optionally, in S203, an AF may send the first address to a PCF, and then an SMF obtains the first address from the PCF. The PCF may include the first address in a user session policy indication sent to the SMF. For example, the AF may send address information to the PCF, or the AF may send the first address to an NEF, and then the NEF sends the first address to the PCF.

Alternatively, another network element (for example, the SMF or a UDM) that is not the PCF may obtain the first address.

Alternatively, the SMF may query a DNS server for the address of the first application, to obtain the first address.

S204: The SMF determines and/or creates a forwarding policy based on the first address.

In a possible example, the forwarding policy includes a first data detection rule, a first data processing rule, a second data detection rule, and a second data processing rule.

As described above, the first data detection rule indicates the L-PSA 1 to detect first data, the first data is data sent by the first application to the L-PSA 1, and a source address of the first data is the first address. The first data processing rule indicates the L-PSA 1 to send first data to the L-PSA 2 through the session of the terminal device. The second data detection rule indicates the L-PSA 1 to detect second data, the second data is data received by the L-PSA 1 through a first session, and an address of the second data is an address of the first session or the first address. The second data processing rule indicates the L-PSA 1 to send second data to the first application.

In another possible example, the forwarding policy may include first policy information and second policy information.

The first policy information indicates the L-PSA 1 to send first data to the L-PSA 2 through the session of the terminal device, the first data is data sent by the first application to the L-PSA 1, and a source address of the first data is the first address; and/or the first policy information indicates the L-PSA 1 to send second data to the first application, the second data is data received by the L-PSA 1 through the first session, and an address of the second data is an address of the first session or the first address.

The second policy information may indicate the L-PSA 1 to modify a source address of first data to an address of the first session; and/or the second policy information may indicate the L-PSA 1 to replace a destination address of second data with the first address.

It may be understood that the first policy information corresponds to a data triggering operation policy in the first data processing rule and/or the second data processing rule. The second policy information corresponds to an address low-cache operation policy in the first data processing rule and/or the second data processing rule. In addition, the first policy information and the second policy information may further correspond to the first data detection rule and/or the second data detection rule, to identify the first data and/or the second data.

In addition, for the ULCL, the forwarding policy may indicate the ULCL to forward data that is from the L-PSA 1 and that is in the session of the terminal device to the L-PSA 2, and/or indicate the ULCL to forward data that is from the L-PSA 2 and that is in the session of the terminal device to the L-PSA 1.

S205: The SMF sends policy information to the L-PSA 1 and the ULCL.

In S205, the SMF may send the forwarding policy to the L-PSA 1. In addition, in S205, the SMF may further send measurement information such as QoS flow information to the ULCL. The QoS flow information includes, for example, a QoS flow policy. The QoS flow information may be determined by the SMF based on the QoS policy of the session of the terminal device.

Optionally, in embodiments of this application, the ULCL and the L-PSA 1 may be two independent network elements, or may be a co-located network element. If the ULCL and the L-PSA 1 are the co-located network element, configurations and packet forwarding processes of the ULCL and the L-PSA 1 may be combined on a same network element. In other words, the SMF needs to send the policy information only to the co-located network element.

Optionally, in embodiments of this application, for example, the SMF may configure each UPF, for example, may configure each UPF through a session creation or modification message, and a related configuration may be sent in a same message or a plurality of messages.

S206: The first application sends the first data to the L-PSA 1.

S207: The L-PSA 1 replaces the source address of the first data with the first address according to the forwarding policy, and sends the first data to the L-PSA 2 through the session of the terminal device.

Optionally, the first data is forwarded to the L-PSA 2 via the ULCL.

S208: The L-PSA 2 forwards the first data to the second data network.

S209: The L-PSA 2 receives the second data from the second data network.

The destination address of the second data is the address of the first session.

S210: The L-PSA 2 sends the second data to the L-PSA 1 via the ULCL through the session of the terminal device.

S211: After receiving the second data, the L-PSA 1 replaces the destination address of the second data with the first address according to the forwarding policy, and sends the second data to the first application.

Based on the procedure shown in FIG. 7A and FIG. 7B, the data may be transmitted between the first application and the second data network through the session of the terminal device, to reduce a data delay.

It may be understood that, in the procedure shown in FIG. 7A and FIG. 7B, S206 corresponds to S101 in the procedure shown in FIG. 4, the action of sending the first data in S207 corresponds to S102, S210 corresponds to S103, and the action of sending the second data in S211 corresponds to S104.

It may be understood that FIG. 7A and FIG. 7B is described by using an example in which the L-PSA 1 replaces the address of the first data and the address of the second data. In actual application, the address of the first data and/or the address of the second data may also be replaced by the ULCL or the L-PSA 2. For example, when address replacement is performed by the ULCL, an address replacement policy needs to be configured on the ULCL, that is, the ULCL performs address replacement on the data whose source address is the first address and that is from the L-PSA 1, that is, replaces the source address with the address of the first session, and/or the ULCL performs address replacement on the data whose destination address is the address of the first session and that is from the L-PSA 2, that is, replaces the destination address with the first address. In this embodiment, the L-PSA 1 needs to associate the address of the first application with the first session (for example, according to the forwarding policy configured by the SMF), to forward the data from the first address through the first session. In addition, because the ULCL has replaced the destination address of the data sent to the first address with the first address, the L-PSA 1 may forward the data based on the destination address.

In addition, for an embodiment in which the L-PSA 2 performs address replacement, refer to this embodiment for implementation. Details are not described again.

It may be further understood that a quantity of ULCLs is not limited in this application. In addition, that the ULCL in the session of the terminal device is completely the same as the ULCL involved in data forwarding between the L-PSA 2 and the L-PSA 1 is not limited in this application. For example, when the terminal device sends data with the L-PSA 1 or the L-PSA 2 via the ULCL, the data is sent via a ULCL 1. When data is transmitted between the L-PSA 1 and the L-PSA 2, the data is sent via a ULCL 2, and the ULCL 1 and the ULCL 2 may be the same or different.

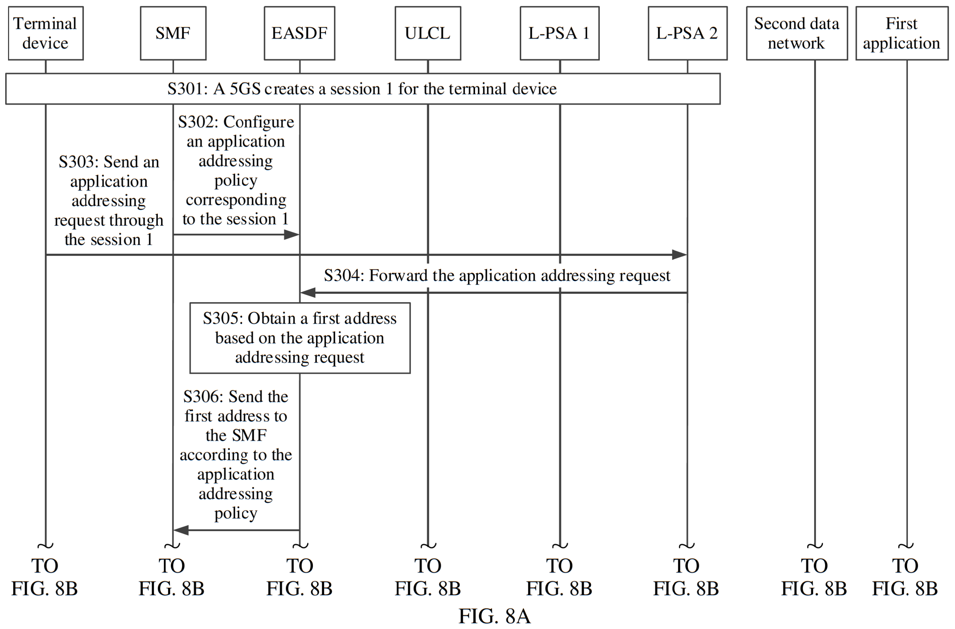

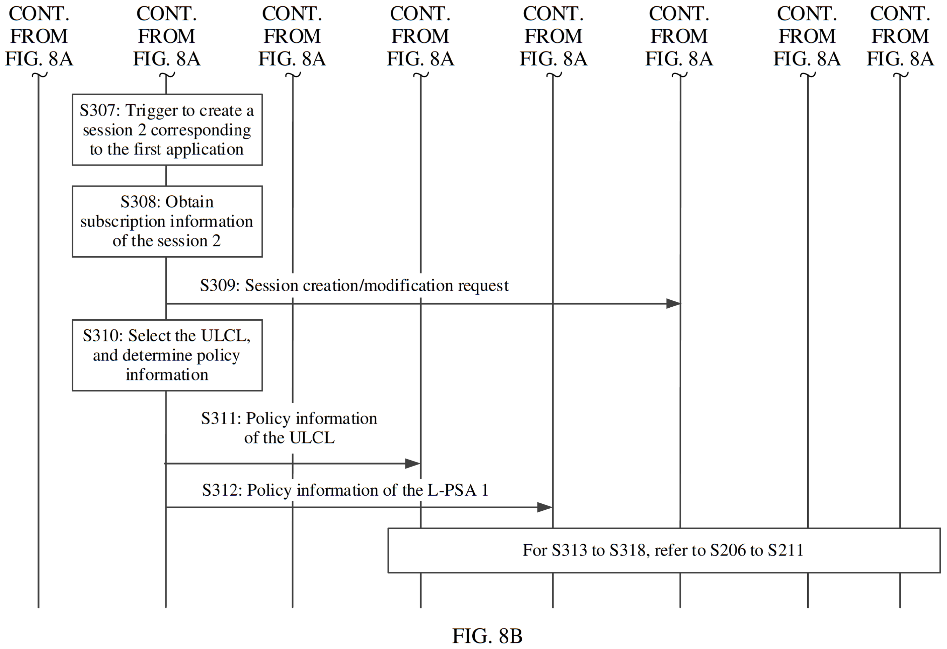

With reference to an example in FIG. 8A and FIG. 8B, the following describes a procedure of the communication method shown in FIG. 4 in the condition 1 by using an example in which the first application is a cloud phone.

S301: A 5GS creates a session of a terminal device, where the session is denoted as a session 1.

S302: An SMF configures, for an EASDF, an application addressing policy corresponding to the session 1, for example, configures a first address as an address of a first application.

S303: The terminal device sends an application addressing request (for example, a DNS request) through the session 1, to request the first address.

S304: After being sent to a PSA through the user session 1, the application addressing request is forwarded to the EASDF. The PSA is an anchor UPF of a central data network.

S305: The EASDF obtains the first address based on the application addressing request.

S306: The EASDF sends the first address to the SMF according to the application addressing policy configured by the SMF.

Therefore, the SMF may learn of the terminal device and the first address.

S307: After determining that the terminal device requests a cloud phone service, the SMF triggers to create a session corresponding to the first application, where the session is denoted as a session 2.

For example, after receiving the address of the first application, the SMF may determine, based on the address, that the terminal device requests the cloud phone service.

S308: The SMF obtains subscription information of the session 2, where the subscription information is used to create the session 2.

In S307, refer to the foregoing manner 1 to manner 3. The SMF may obtain the subscription information of the session 2 in one or more of the following manners.
(1) Subscription information of the terminal device is used as the subscription information of the session 2, or policy information of a session between an access network device of the terminal device and an L-PSA 1 is used as the subscription information of the session 2.
(2) An application access policy and/or subscription information of the first application are/is obtained from subscription information of the terminal device, and the subscription information of the session 2 is determined based on the application access policy and/or the subscription information.
(3) An identifier of the first application is obtained from subscription information of the terminal device, subscription information corresponding to the first application is queried based on the identifier of the first application, and the subscription information of the session 2 is determined based on the subscription information of the first application.

S309: The SMF sends a session creation/modification request to an L-PSA 2.

The session creation/modification request may include a forwarding policy of the L-PSA 2.

Optionally, the creation/modification request may include an address that is of the session 2 and that is allocated by the SMF.

Optionally, the creation/modification request may indicate the L-PSA 2 to allocate the address of the session 2. Correspondingly, the L-PSA 2 may send a creation/modification response to the SMF, where the response carries the address that is of the session 2 and that is allocated by the L-PSA 2.

S310: The SMF selects a ULCL, and determines policy information.

The policy information may include a forwarding policy.

For the ULCL, the forwarding policy may indicate the ULCL to forward data that is from the L-PSA 1 and that is in the session 2 to the L-PSA 2, and/or indicate the ULCL to forward data that is from the L-PSA 2 and that is in the session 2 to the L-PSA 1.

S311: The SMF sends policy information to the ULCL.

S312: The SMF sends policy information to the L-PSA 1.

The policy information may include a forwarding policy and/or an address translation policy.

Refer to the description in S204. The forwarding policy may include the first data detection rule, the first data processing rule, the second data detection rule, and the second data processing rule. Alternatively, the forwarding policy may include the first policy information and the second policy information in S204.

If the SMF or the L-PSA 2 allocates an address (denoted as a second address) to the session 2, for the L-PSA 1, the address translation policy may indicate the L-PSA 1 to replace an address of first data with the second address, and/or replace a destination address of second data with the first address.

If the address of the session 2 is not allocated, for the L-PSA 1, the address translation policy may indicate the L-PSA 1 to replace an address of first data with an address of the terminal device, and/or replace a destination address of second data with the first address.

For S313 to S318, refer to S206 to S211, that is, the data forwarding processes in the procedures shown in FIG. 7A and FIG. 7B and FIG. 8A and FIG. 8B are similar.

Based on the procedure shown in FIG. 8A and FIG. 8B, the data may be transmitted between the first application and the second data network through the session 2, to reduce a data delay. The session 2 is the session corresponding to the first application.

It may be understood that, in the procedure shown in FIG. 8A and FIG. 8B, S313 corresponds to S101 in the procedure shown in FIG. 4, the action of sending the first data in S314 corresponds to S102, S317 corresponds to S103, and the action of sending the second data in S318 corresponds to S104.

Optionally, in the procedure shown in FIG. 8A and FIG. 8B, the ULCL may alternatively replace an address of data in the session 2. In this case, in S309, the policy information may further include an address translation policy. The address translation policy may indicate the ULCL to perform address replacement on the data transmitted through the session 2. Refer to the description of FIG. 7A and FIG. 7B. When the ULCL performs address replacement, the L-PSA 1 may not replace the address of the first data and/or the address of the second data. For the address translation policy, refer to the corresponding implementation in the description in S311. Details are not described again.

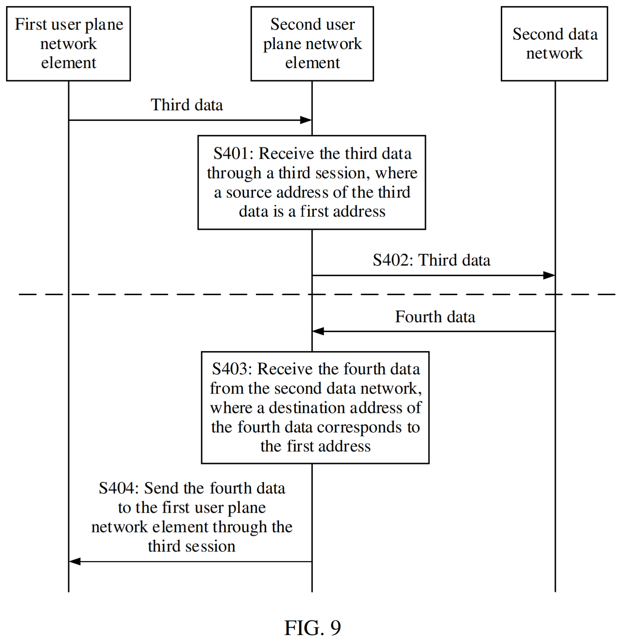

This application further provides another communication method, to improve a transmission delay and communication costs in a process in which an edge application obtains network data, and improve user experience. The following describes the method with reference to FIG. 9.

As shown in FIG. 9, the communication method provided in this embodiment of this application may include steps shown in S401 and S402 and/or S403 and S404.

S401: A second user plane network element receives third data from a first user plane network element through a third session, where a source address of the third data is a first address.

For the first user plane network element, the second user plane network element, and the first address, refer to the descriptions in S101.

In S401, the third session is a session of a terminal device. For details, refer to the description of the session of the terminal device in the condition 1 in this application. Details are not described again.

In S401, the third data may be data that is from a first application and that is sent to a second data network. Because the second user plane network element is used as an L-PSA of the second data network, data that is sent by the first application and whose destination is the second data network may be sent to the second data network via the second user plane network element. Therefore, in S401, the second user plane network element may receive the first data.

Optionally, in S401, the second user plane network element may identify, according to a third data detection rule, the third data in data received through the third session. For example, according to the third data detection rule, when identifying that the data received through the first session meets a condition of the third data, that is, a source address of the data is the first address, the second user plane network element determines that the data is the third data. For example, the third data detection rule is, for example, a packet detection rule, and may carry the condition of the third data, that is, the third data is transmitted through the third session, and the source address is the first address.

Further, optionally, the third data detection rule may be sent by an SMF to the second user plane network element. For example, the SMF may generate the third data detection rule based on an address (namely, the first address) of the first application, and configure the third data detection rule for the second user plane network element through a session creation or modification message.

Based on S401, the second user plane network element may identify the third data whose source address is the first address and that is transmitted through the third session. Generally, the third session is created for the terminal device, and the source address of the data transmitted through the third session is an address of the terminal device. When the first application is an application, for example, a cloud phone, it may be considered that the data from the first application is data of the terminal device. To ensure reliable transmission of the data of the terminal device, the data whose source address is the first address may be allowed to be transmitted through the first session.

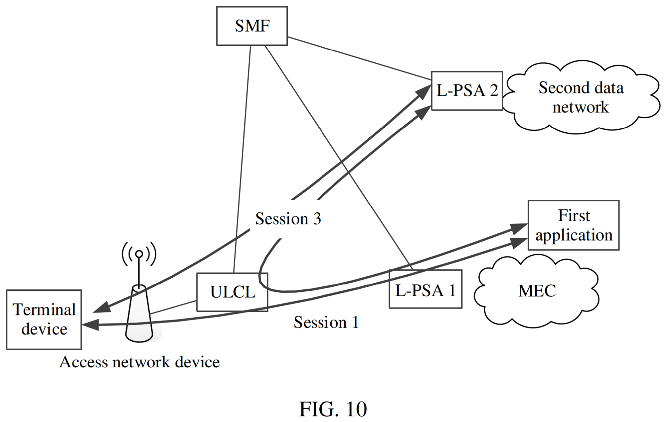

As shown in FIG. 10, the third session is represented as a session 3 in FIG. 10. In this scenario, the data between the first application and the second data network may be transmitted through a tunnel between an L-PSA 1 of the session 3 and a ULCL and a tunnel between the ULCL and an L-PSA 2. A session between the first application and the terminal device may be transmitted through a tunnel between an access network device and the ULCL and a tunnel between the ULCL and the L-PSA 1, and the two tunnels belong to a session 1 between the access network device and the L-PSA 1. In addition, data between the terminal device and the second data network may also be transmitted through the session 3, that is, transmitted through the tunnel between the access network device and the ULCL and the tunnel between the ULCL and the L-PSA 2.

S402: The second user plane network element sends the third data to the second data network.

Optionally, a destination address of the third data may be an address in the second data network. Therefore, the second user plane network element may send the third data to the second data network based on the address.

Optionally, before sending the third data, the second user plane network element may further replace the source address of the third data with the third address. The third address corresponds to the first address. For example, the third address is an address obtained by performing address translation on the first address. The second user plane network element may further store a correspondence between the first address and the third address, so that when receiving data whose destination address is the third address, the second user plane network element forwards the data to the first application.

The second user plane network element may send the third data to the second data network according to a third data processing rule. For example, the third data processing rule may indicate to send the third data to the second data network. The third data processing rule corresponds to the third data detection rule, that is, the second user plane network element processes, according to the third data processing rule, the data identified according to the third data detection rule. The third data processing rule may be, for example, a forwarding action rule.

Optionally, the third data processing rule may be sent by the SMF to the second user plane network element. Further, optionally, the SMF may configure the third data detection rule and the third data processing rule for the second user plane network element through a same creation or modification message.

It may be understood that the third data detection rule and the third data processing rule are configured for the third session.

It may be further understood that the third data may be sent by the first user plane network element to the second user plane network element through the third session. Optionally, the third data is sent to the second user plane network element via the ULCL through the third session.

For a process in which the first user plane network element forwards the third data to the second user plane network element, refer to the process in which the first user plane network element forwards the first data through the first session (the first session herein is the session of the terminal device) in S101 and S102. Same content is not described again. A difference between the two lies in that in the process in which the first user plane network element forwards the third data, the first user plane network element does not need to replace the source address of the third data, but in S102, when the first session is the session of the terminal device, the first user plane network element may replace the source address of the first data with the address of the terminal device.

S403: The second user plane network element receives fourth data from the second data network, where a destination address of the fourth data corresponds to the first address.

For example, the destination address of the fourth data is the first address, or the third address corresponding to the first address.

The fourth data may be data sent by the second data network to the first application. Because the second user plane network element is used as the L-PSA of the second data network, data that is sent from the second data network to another data network (including the first data network) may be sent from the second data network via the second user plane network element. Therefore, in S403, the second user plane network element may receive the fourth data.

Optionally, in S403, the second user plane network element may identify, according to a fourth data detection rule, the fourth data from the second data network. For example, according to the fourth data detection rule, when identifying that data from the second data network meets a condition of the fourth data, that is, a destination address of the data is the first address, the second user plane network element determines that the data is the fourth data. For example, the fourth data detection rule is, for example, a packet detection rule. The rule may indicate that the fourth data is the data from the second user plane network element, and the destination address of the data is the first address. It may be understood that if the destination address of the fourth data is the third address, the second user plane network element may perform address translation on the third address, to translate the third address into the first address (replace the third address with the first address), and then perform data detection according to the fourth data detection rule.

Further, optionally, the fourth data detection rule may be sent by the SMF to the second user plane network element. For example, the SMF may generate the fourth data detection rule based on the address (namely, the first address) of the first application, and configure the fourth data detection rule for the second user plane network element through a session creation or modification message. For a manner in which the SMF obtains the first address, refer to the description in S101.

S404: The second user plane network element sends the fourth data to the first user plane network element through the third session.

Optionally, in S404, the second user plane network element may send the fourth data to the first user plane network element according to the fourth data processing rule through the third session. For example, the second data processing rule indicates that the second data is to be sent to the first application. The second data processing rule corresponds to the second data detection rule, that is, the first user plane network element processes, according to the second data processing rule, the data identified according to the second data detection rule. The second data processing rule is, for example, a forwarding action rule.

Further, optionally, the second data processing rule may be sent by the SMF to the first user plane network element. For example, the SMF may generate the second data processing rule based on the address (namely, the first address) of the first application, and configure the second data processing rule for the first user plane network element through a session creation or modification message. For a process in which the SMF obtains the first address, refer to the description in S101. Details are not described herein again.

It may be understood that the fourth data detection rule and the fourth data processing rule are configured for the third session.

In addition, optionally, the SMF may configure at least two of the third data detection rule, the third data processing rule, the fourth data detection rule, and the fourth data processing rule for the second user plane network element through a same creation or modification message.

It may be understood that, corresponding to S404, the first user plane network element may receive the fourth data through the third session, and send the fourth data to the first application. Optionally, the fourth data may be sent to the first user plane network element via the ULCL through the third session.

For a process in which the first user plane network element receives the fourth data from the second user plane network element, and sends the fourth data to the first application, refer to the process in which the first user plane network element receives the second data from the second user plane network element through the first session (the address of the second data herein is the first address) and sends the second data to the first application in S403 and S404. Same content is not described again.

It may be understood that, in the example shown in FIG. 9, the first session may be further used to transmit the data of the terminal device. It is assumed that the address of the terminal device is the fourth address. In this case, the second user plane network element may further store a correspondence between the fourth address and a fifth address, where the fifth address is an address obtained by performing address translation on the fourth address. The third address is different from the fifth address (for example, a combination of an IP address and a port number included in the third address is different from a combination of an IP address and a port number included in the fifth address), and the first address is different from the fourth address (for example, a combination of an IP address and a port number included in the first address is different from a combination of an IP address and a port number included in the fourth address). Therefore, the second user plane network element may perform collaborative address translation on the first address and the fourth address. In a collaborative address translation manner, when the first application and the terminal device separately send data to the second data network, source addresses of the data are respectively the first address and the fourth address, and after the second user plane network element performs address translation, the source addresses of the data are respectively changed to the third address and the fifth address. Correspondingly, when the second data network separately sends data to the first application and the terminal device, source addresses of the data are respectively the third address and the fifth address. The second user plane network element performs address translation, to respectively replace the addresses of the data with the first address and the fourth address, and then may forward the data to the first application and the terminal device through the first session. Therefore, sending of data on different paths in a same session can be implemented.

It may be understood that when S401 and S402, and S403 and S404 are all performed, an execution time sequence of S401 and S402, and S403 and S404 is not limited in this application. For example, S401 and S402 may be performed before S403 and S404, or S403 and S404 may be performed before S401 and S402. For another example, S401 and S402, and S403 and S404 may also be performed at the same time without affecting each other. In addition, in the procedure shown in FIG. 9, S401 and S402 may be performed but S403 and S404 are not performed, or S403 and S404 may be performed but S401 and S402 are not performed.

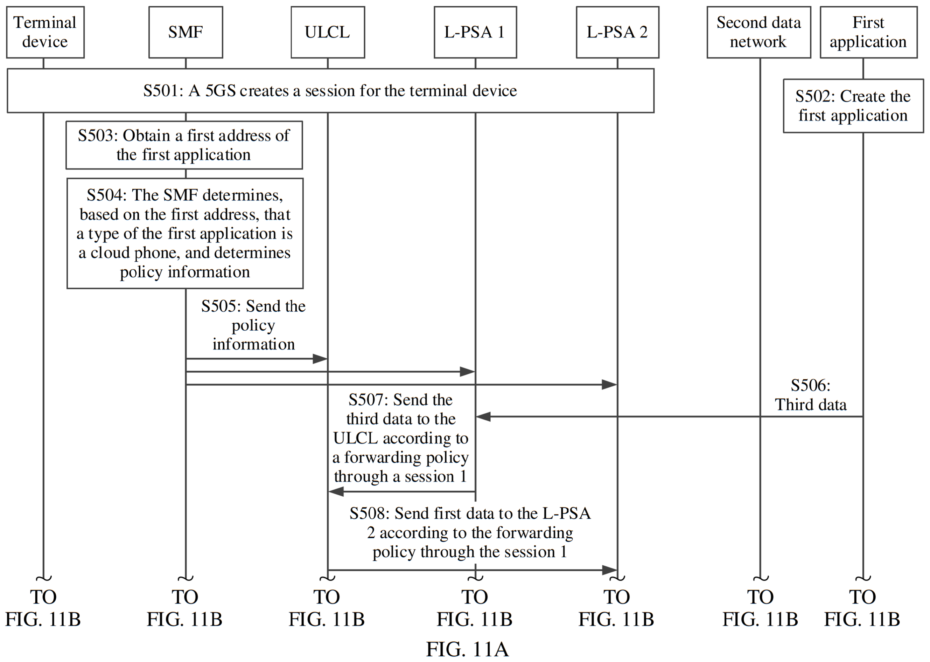

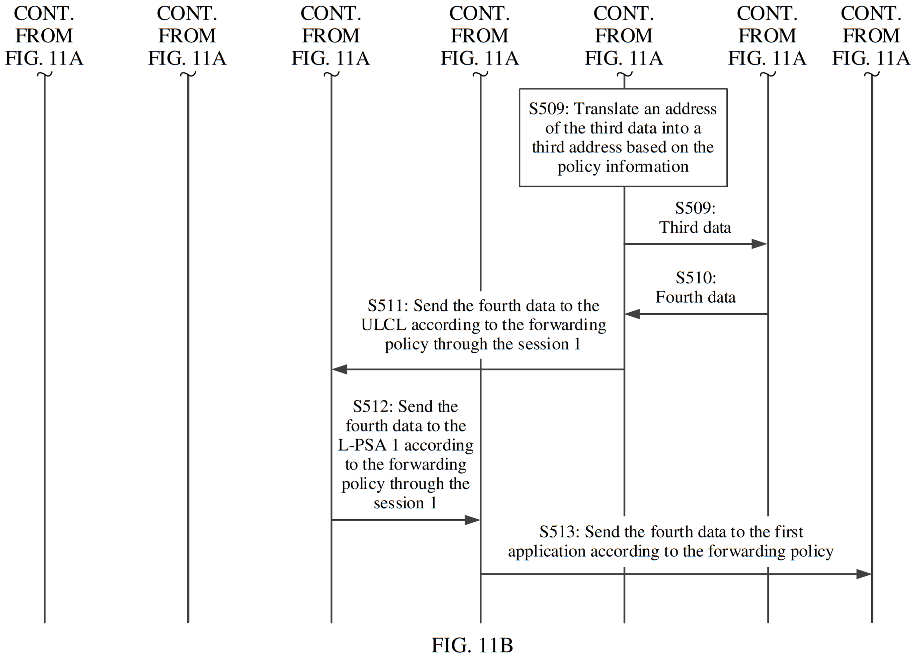

With reference to an example in FIG. 11A and FIG. 11B, the following describes a procedure of the communication method shown in FIG. 9 in the condition 2 by using an example in which the first application is a cloud phone.

For S501 to S503, refer to S201 to S203 respectively. Details are not described again.

S504: An SMF determines, based on the first address, that a type of the first application is a cloud phone, and determines policy information.

The policy information includes respective policy information of an L-PSA 1, a ULCL, and an L-PSA 2. The policy information may include a forwarding policy and/or an address translation policy.

For the L-PSA 1, the policy information may include a forwarding policy indicating the L-PSA 1 to forward, to the ULCL through a session 1, data that is from the first application and whose source address is the first address. In addition, the forwarding policy may further indicate the L-PSA 1 to forward, to the first application, data that is received through the session 1 and that is from the ULCL.

For the ULCL, the policy information may include a forwarding policy indicating the ULCL to forward, to the L-PSA 2 through a session 1, data that is received through the session 1 and that is from the L-PSA 1 and whose source address is the first address. In addition, the policy information may further indicate the ULCL to forward, to the L-PSA 1 through the session 1, data that is received through the session 1 and that is from the L-PSA 2 and whose destination address is the first address.

For the L-PSA 2, the policy information may include a forwarding policy indicating to send, to the second data network, data that is received through a session 1 and whose source address is the first address, and indicating to send, to the ULCL through the session 1, data that is from the second data network and whose destination address is the first address. In addition, the forwarding policy may further indicate to send, to the second data network, data that is received through the session 1 and whose source address is the fourth address, and indicate to send, to the ULCL through the session 1, data that is from the second data network and whose destination address is the fourth address.

For the L-PSA 2, the policy information may further include an address translation policy indicating the L-PSA 2 to perform address translation on an address of the terminal device and the first address. The policy information indicates to replace the source address of the data with the third address from the first address before sending the data to the second data network. In addition, the policy information indicates to replace the destination address of the data with the first address from the third address before sending the data to the ULCL through the session 1, and/or the address of the terminal device is denoted as the fourth address. The policy information may indicate to replace the source address of the data with the fifth address from the fourth address before sending the data to the second data network, and indicate to replace the destination address of the data with the fourth address from the fifth address before sending the data to the ULCL through the session 1. As described in this application, a combination of an IP address and a port number included in the third address is different from a combination of an IP address and a port number included in the fifth address.

S505: The SMF sends the respective policy information to the ULCL, the L-PSA 1, and the L-PSA 2.

The policy information may be carried in a session creation/modification request.

S506: The first application sends third data to the L-PSA 1.

An address of the third data is the first address.

S507: The L-PSA 1 sends the third data to the ULCL according to the forwarding policy through the session 1.

In S506, the third data may be specifically sent from the L-PSA 1 to the ULCL through an N9 tunnel corresponding to the session 1.

S508: The ULCL sends first data to the L-PSA 2 according to the forwarding policy through the session 1.

S509: The L-PSA 2 translates the address of the third data into the third address based on the policy information, and sends the third data to the second data network.

S510: The L-PSA 2 receives fourth data from the second data network.

A destination address of the data is the first address or the third address. If the destination address of the data is the third address, the L-PSA 2 needs to replace the destination address with the first address according to the address translation policy.

S511: The L-PSA 2 sends the fourth data to the ULCL according to the forwarding policy through the session 1.

S512: The ULCL sends the fourth data to the L-PSA 1 according to the forwarding policy through the session 1.

S513: The L-PSA 1 sends the fourth data to the first application according to the forwarding policy.

It can be learned that, based on the procedure shown in FIG. 11A and FIG. 11B, data transmission between the first application and the first data network through the session 1 may be supported. The session 1 is a session of the terminal device, and the terminal device may also transmit data to the second data network through the session 1. Therefore, both the terminal device and the first application send data to the second data network through the session 1. Source addresses of the data sent by the terminal device and the first application are respectively the address of the terminal device and the first address.

It may be understood that, in the procedure shown in FIG. 11A and FIG. 11B, S508 corresponds to S201 in the procedure shown in FIG. 9, the action of sending the third data in S509 corresponds to S202, S510 corresponds to S203, and the action of sending the fourth data to the ULCL in S511 corresponds to S204. It may be further understood that, in the procedure shown in FIG. 11A and FIG. 11B, S506 corresponds to S101 in the procedure shown in FIG. 4, S507 corresponds to S102, S511 corresponds to S103, and S512 corresponds to S104.

Based on a same concept, an embodiment of this application further provides a communication apparatus. The communication apparatus may include corresponding hardware structures and/or software modules for performing the functions shown in the foregoing method. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

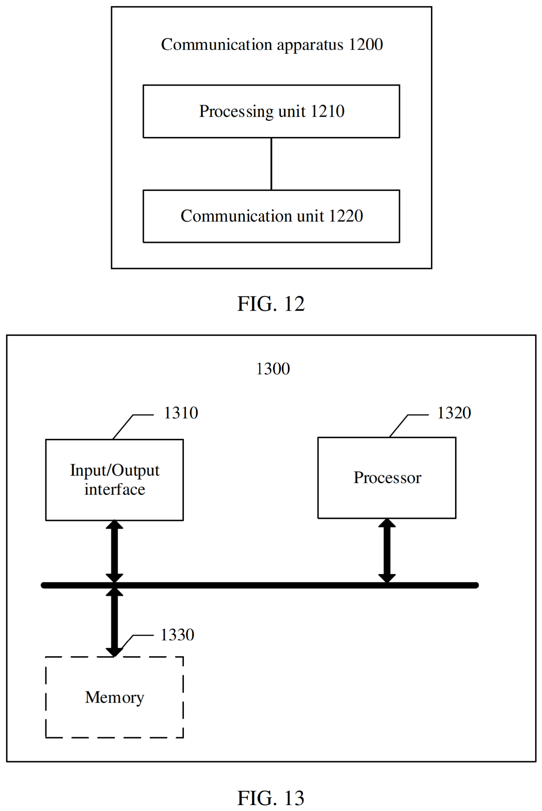

FIG. 12 to FIG. 14 are diagrams of structures of possible communication apparatuses according to embodiments of this application. The communication apparatuses may be configured to implement functions of the network device and/or the terminal apparatus in the foregoing method embodiment, and therefore can also implement beneficial effect of the foregoing method embodiment. In a possible implementation, the communication apparatus may be the first user plane network element (or the L-PSA 1), the second user plane network element (or the L-PSA 2), or the session management network element (or the SMF) in the foregoing method. For related details and effect, refer to the descriptions in the foregoing embodiments.

As shown in FIG. 12, a communication apparatus 1200 includes a processing unit 1210 and a communication unit 1220. The communication unit 1220 may implement a corresponding communication function. The processing unit 1210 is configured to perform data processing, for example, parse/read data or information received by the communication unit 1220, for example, policy information, or trigger the communication unit 1220 to send data or information, or generate to-be-sent data or information. The communication unit 1220 may alternatively be a transceiver unit, an input/output interface, or the like, and is configured to perform a receiving and/or sending action by the communication apparatus 1200. The communication apparatus 1200 may be configured to implement functions of the first user plane network element (or the L-PSA 1), the second user plane network element (or the L-PSA 2), or the session management network element (or the SMF) in the method embodiments shown in FIG. 4, FIG. 7A and FIG. 7B to FIG. 9, or FIG. 11A and FIG. 11B. For actions that can be performed by the communication apparatus, refer to the descriptions in the foregoing method embodiments. Details are not described herein again.

It may be understood that in embodiments of this application, division into modules is an example, and is merely logical function division. In actual implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software functional module.

FIG. 13 shows a communication apparatus 1300 provided in an embodiment of this application. The communication apparatus 1300 is configured to implement the communication method provided in this application. The communication apparatus 1300 may be a communication apparatus to which the communication method is applied, or may be a component in the communication apparatus, or may be an apparatus that can be used in combination with the communication apparatus. The communication apparatus 1300 may be a first user plane network element (or an L-PSA 1), a second user plane network element (or an L-PSA 2), or a session management network element (or an SMF). The communication apparatus 1300 may be a chip system or a chip. In embodiments of this application, the chip system may include a chip, or may include a chip and another discrete component. The communication apparatus 1300 includes at least one processor 1320, configured to implement the communication method provided in embodiments of this application. The communication apparatus 1300 may further include an input/output interface 1310, and the input/output interface may include an input interface and/or an output interface. In embodiments of this application, the input/output interface 1310 may be configured to communicate with another apparatus via a transmission medium, and a function of the input/output interface 1310 may include sending and/or receiving. For example, when the communication apparatus 1300 is the chip, the communication apparatus 1300 performs transmission with another chip or component through the input/output interface 1310. The processor 1320 may be configured to implement the method shown in the foregoing method embodiments.

For example, the processor 1320 may be configured to perform an action performed by the processing unit 1210, and the input/output interface 1310 may be configured to perform an action performed by the communication unit 1220. Details are not described again.

Optionally, the communication apparatus 1300 may further include at least one memory 1330, configured to store program instructions and/or data. The memory 1330 is coupled to the processor 1320. The coupling in embodiments of this application may be an indirect coupling or a communication connection between apparatuses, units, or modules in an electrical form, a mechanical form, or another form, and is used for information exchange between the apparatuses, the units, or the modules. The processor 1320 may cooperate with the memory 1330. The processor 1320 may execute the program instructions stored in the memory 1330. At least one of the at least one memory may be integrated with the processor.

In embodiments of this application, the memory 1330 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In embodiments of this application, the processor 1320 may be a general-purpose processor, a digital signal processor, an application-specific integrated circuit, a field programmable gate array or another programmable logic component, a discrete gate or a transistor logic component, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

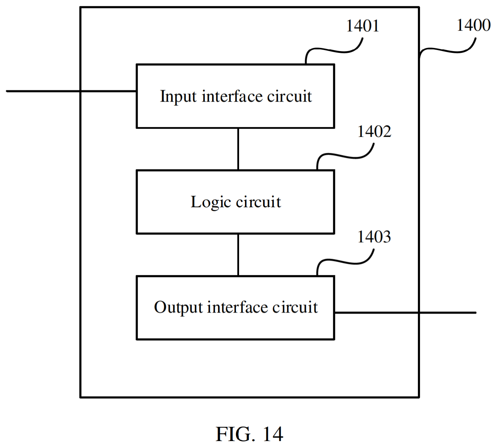

FIG. 14 shows a communication apparatus 1400 provided in an embodiment of this application. The communication apparatus 1400 is configured to implement the communication method provided in this application. The communication apparatus 1400 may be a communication apparatus to which the communication method shown in embodiments of this application is applied, a component in the communication apparatus, or an apparatus that can be used in combination with the communication apparatus. The communication apparatus 1400 may be a first user plane network element (or an L-PSA 1), a second user plane network element (or an L-PSA 2), or a session management network element (or an SMF). The communication apparatus 1400 may be a chip system or a chip. In embodiments of this application, the chip system may include a chip, or may include a chip and another discrete component. A part or all of the communication method provided in the foregoing embodiments may be implemented by hardware or software. When the communication method is implemented by hardware, the communication apparatus 1400 may include an input interface circuit 1401, a logic circuit 1402, and an output interface circuit 1403.

Optionally, an example in which the apparatus is configured to implement a function of a receive end. The input interface circuit 1401 may be configured to perform the receiving action performed by the communication unit 1220, the output interface circuit 1403 may be configured to perform the sending action performed by the communication unit 1220, and the logic circuit 1402 may be configured to perform the action performed by the processing unit 1210. Details are not described again.

Optionally, during specific implementation, the communication apparatus 1400 may be a chip or an integrated circuit.

A part or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. The instructions, when executed on a computer, cause the computer to perform the foregoing method embodiments.

An embodiment of this application provides a communication system, including a first user plane network element (or an L-PSA 1) and a second user plane network element (or an L-PSA 2), and optionally, may further include a session management network element (or an SMF). The communication system may be configured to perform any one or more of the procedures in FIG. 4, FIG. 7A and FIG. 7B to FIG. 8A and FIG. 8B, or FIG. 11A and FIG. 11B.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic component, a transistor logic component, a hardware component, or any combination thereof. The general-purpose processor may be a microprocessor or any conventional processor or the like.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first user plane network element, first data, wherein a source address of the first data is a first address, the first address is an address of a first application, the first application serves a terminal device, and the first application corresponds to a first data network; and
sending, by the first user plane network element, the first data to a second user plane network element through a first session, wherein the first session is a session of the terminal device or a session corresponding to the first application, and the second user plane network element corresponds to a second data network; and/or
receiving, by the first user plane network element, second data from the second user plane network element through the first session, wherein a destination address of the second data is an address of the first session or the first address; and
sending, by the first user plane network element, the second data to the first application.

2. The method according to claim 1, wherein the method further comprises:
modifying, by the first user plane network element, the source address of the first data to the address of the first session; and/or
modifying, by the first user plane network element, the destination address of the second data to the first address.

3. The method according to claim 1, wherein the method further comprises:
receiving, by the first user plane network element, first policy information from a session management network element, wherein the first policy information indicates to send the first data to the second user plane network element through the first session, and/or the first policy information indicates to send the second data to the first application.

4. The method according to claim 2, wherein the method further comprises:
receiving, by the first user plane network element, second policy information from a session management network element, wherein the second policy information indicates to modify the source address of the first data to the address of the first session, and/or the second policy information indicates to modify the destination address of the second data to the first address.

5. The method according to claim 1, wherein the first session is the session corresponding to the first application, and the method further comprises:
modifying, by the first user plane network element, the source address of the first data to a second address, wherein the second address corresponds to the session corresponding to the first application; and/or
modifying, by the first user plane network element, the destination address of the second data to the first address.

6. The method according to claim 5, wherein the method further comprises:
receiving, by the first user plane network element, third policy information from a session management network element, wherein the third policy information indicates to modify the source address of the first data to the second address, and/or the third policy information indicates to modify the destination address of the second data to the first address.

7. A communication method, comprising:
receiving, by a second user plane network element, third data from a first user plane network element through a third session, wherein a source address of the third data is a first address, the first address is an address of a first application, the third session is a session of the terminal device, the first application corresponds to a first data network, and the second user plane network element corresponds to a second data network; and
sending, by the second user plane network element, the third data to the second data network; and/or
receiving, by the second user plane network element, fourth data from the second data network, wherein a destination address of the fourth data corresponds to the first address; and
sending, by the second user plane network element, the fourth data to the first user plane network element through the third session.

8. The method according to claim 7, wherein the method further comprises:
receiving, by the second user plane network element, fourth policy information from a session management network element, wherein the fourth policy information indicates to send the third data to the second data network, and/or the fourth policy information indicates to send the fourth data to the first user plane network element through the first session.

9. A communication method, comprising:
obtaining, by a session management network element, a first address, wherein the first address corresponds to a first application, the first application serves a terminal device, and the first application corresponds to a first data network; and
sending, by the session management network element, first policy information to a first user plane network element, wherein
the first policy information indicates to send first data to a second user plane network element through a first session, a source address of the first data is the first address, the second user plane network element corresponds to a second data network, and the first session is a session of the terminal device or a session of the first application; and/or
the first policy information indicates to send second data to the first application, the second data is received through the first session, the second data is from the second user plane network element, and a destination address of the second data is an address of the first session or the first address.

10. The method according to claim 9, wherein the method further comprises:
sending, by the session management network element, second policy information to the first user plane network element, wherein the second policy information indicates to modify the source address of the first data to the address of the first session, and/or the second policy information indicates to modify the destination address of the second data to the first address.

11. The method according to claim 9 or 10, wherein the first session is the session corresponding to the first application, and the method further comprises:
sending, by the session management network element, third policy information to the first user plane network element, wherein the third policy information indicates to modify the source address of the first data to a second address, and the second address corresponds to the first session; and/or the third policy information indicates to modify the destination address of the second data to the first address.

12. The method according to claim 11, wherein the method further comprises:
creating, by the session management network element, the session corresponding to the first application.

13. The method according to claim 12, wherein the creating, by the session management network element, the session corresponding to the first application comprises:
creating, by the session management network element based on subscription information of the terminal device, the session corresponding to the first application.

14. The method according to any one of claims 9 to 13, wherein the method further comprises:
sending, by the session management network element, fourth policy information to the second user plane network element, wherein the fourth policy information indicates to send third data received through a third session to the second data network, the third data is from the first user plane network element, a source address of the third data is the first address, and the third session is a session of the terminal device; and/or
the fourth policy information indicates to send fourth data to the first user plane network element through the third session, and a destination address of the fourth data is the first address.

15. A communication apparatus, comprising a processor, wherein the processor is configured to execute a computer program or instructions, to implement the method according to any one of claims 1 to 14.

16. The apparatus according to claim 15, further comprising a memory and/or a transceiver, wherein the memory is configured to store the computer program or the instructions, and the transceiver is used by the apparatus to perform communication.

17. A computer-readable storage medium, wherein the storage medium stores a computer program or instructions, and when the computer program or the instructions are executed by a communication apparatus, the method according to any one of claims 1 to 14 is implemented.

18. A communication system, comprising at least two of the following communication apparatuses:
a first user plane network element configured to perform the method according to any one of claims 1 to 6;
a second user plane network element configured to perform the method according to claim 7 or claim 8; and
a session management network element configured to perform the method according to any one of claims 9 to 14.
